# EUROPÄISCHE PATENTANMELDUNG

(11) **EP 3 173 676 A1**
(43) Veröffentlichungstag der Anmeldung: **31.05.2017**
(21) Anmeldenummer: 16196362.4
(22) Anmeldetag: 28.10.2016
(51) Int. Cl.: F16M 11/04, F16M 11/14, F16M 13/04, A45F 5/02, G03B 17/56

(54) **SICHERUNGSELEMENT FÜR EINE KONNEKTORSCHRAUBE**

(30) Priorität: 26.11.2015 DE 202015106449 U
(71) Anmelder: Geller, Wolfgang-Peter, 21376 Garlstorf (DE)
(72) Erfinder: Geller, Wolfgang-Peter, 21376 Garlstorf (DE)
(74) Vertreter: Raffay & Fleck

(57) **Zusammenfassung**

Offenbart wird ein an einer in einer an einem Boden (B) eines Kameragehäuses eingelassenen Gewindebuchse festlegbaren Konnektorschraube lösbar festlegbares Sicherungselement (33) zum Verhindern eines Lösens der Konnektorschraube aus der Gewindebuchse, wobei das Sicherungselement (33) folgende Bestandteile aufweist:
i) einen Verbindungsabschnitt (34) zum lösbaren Festlegen an der Konnektorschraube;
ii) einen in der mit der in die Gewindebuchse eingeschraubten Konnektorschraube verbundenen Position des Sicherungselements (33) sich entlang des Bodens des Kameragehäuses erstreckenden, sich an den Verbindungsabschnitt (34) anschließenden Abstandsabschnitt (38); und
iii) einen sich an den Abstandsabschnitt (38) anschließenden, schräg zu diesem verlaufenden Hintergriffabschnitt (39) zum Hintergreifen einer sich an den Boden anschließenden Wand des Kameragehäuses, insbesondere der Rückwand.

Auf diese Weise wird mit einfachen Mitteln eine effektive, ggf. zusätzliche, Sicherung der Schraubverbindung der in der Gewindebuchse festgelegten Konnektorschraube erhalten.

## Beschreibung

Die Erfindung betrifft ein Sicherungselement zum Sichern einer in einer an einem Boden eines Kameragehäuses eingelassenen Gewindebuchse festlegbaren Konnektorschraube. Sie betrifft ferner eine mit einem solchen Sicherungselement versehene Konnektorschraube und schließlich auch einen Konnektor zum Verbinden eines Trageriemens mit einer Kamera, der eine derartige Konnektorschraube mit einem Sicherungselement enthält.

Foto- und auch Filmkameras enthalten bereits seit vielen Jahren standardmäßig in den Boden ihrer jeweiligen Kameragehäuse eingelassene Gewindebuchsen, die ursprünglich für die Verbindung mit einer Stativschraube zum Festlegen der Kamera an einem Stativ angeordnet und gedacht waren. In dieser Verwendung werden die entsprechenden Gewindebuchsen auch weiterhin genutzt. Allerdings hat sich zuletzt eine weitere Möglichkeit etabliert, diese Gewindebuchsen zu verwenden, indem dort mit passenden Konnektorschrauben versehene Konnektoren für die Verbindung mit Trageriemen festgelegt werden. Ein entsprechend ausgestattetes Transportsystem für Kameras ist zum Beispiel in der WO 2008/131135 A1 beschrieben.

Bei dem dort gezeigten Kameratransportsystem wird also eine Konnektorschraube in die ursprünglich für den Anschluss einer Stativschraube vorgesehene Gewindebuchse am Boden eines Kameragehäuses eingeschraubt, und der mit der Konnektorschraube verbundene Konnektor wird mit einem quer über den Torso oder senkrecht über die Schulter zu tragenden Trageriemen verbunden. Bei dieser Tragweise hängt die Kamera dann seitlich am Körper des Benutzers, und das gesamte Gewicht der Kamera lastet auf der Verbindung zwischen der Gewindebuchse und der Konnektorschraube. Dieses Gewicht kann, insbesondere wenn Spiegelreflexkameras mit größeren Objektiven höherer Brennweite verwendet werden, durchaus einige Kilogramm betragen. Zudem wird, wenn das in der bezeichneten Schrift offenbarte Kameratransportsystem genutzt wird, die gebildete Schraubverbindung durch entsprechende Bewegungen des Nutzers beim Gehen oder auch bei der Anwendung der Kamera zum Aufnehmen von Bildern zusätzlich beansprucht; es kommt hier zu Querbewegungen, Rüttelbewegungen und dergleichen.

Diese Bewegungen können nun dazu führen, dass sich die in die Gewindebuchse am Boden des Kameragehäuses eingeschraubte Konnektorschraube löst. Geschieht dies, und löst sich die Konnektorschraube vollständig aus der Gewindebuchse, so kann dann im schlimmsten Falle die an dem Transportsystem befestigte Kamera herunter- und zu Boden fallen und dabei beschädigt werden. Bedenkt man die Kosten für hochwertige Kameras und Objektive, so kann in einem solchen Falle sehr schnell ein erheblicher finanzieller Schaden entstehen, der ohne weiteres mehrere tausend Euro betragen kann. Entsprechend gilt es hier, die genannte Schraubverbindung besonders sicher zu gestalten.

Bisher werden für die Sicherung dieser Verbindung lediglich elastische Unterlegringe verwendet, die zwischen einem überkragenden Abschnitt am Kopfbereich der Konnektorschraube und dem Boden des Kameragehäuses gelegt werden und die nach einem Festziehen der Konnektorschraube eine gegen die Einschraubrichtung gerichtete Druckkraft auf die Schraube ausüben und so für ein zusätzliches Verkeilen der Gewindegänge der Konnektorschraube in den entsprechenden Gegengewindegängen der Gewindebuchse sorgen sollen. Es hat sich nun allerdings herausgestellt, dass gerade bei zum Beispiel in einer Situation, in der der Nutzer des Kameratragsystems schnell läuft, entstehenden heftigeren Auf- und Abbewegungen und Schlägen bzw. Stößen diese Sicherung nicht ausreichen kann, es dennoch zu einem Ablösen der Konnektorschraube aus der Gewindebuchse kommen kann. Entsprechend ist es Aufgabe der Erfindung, hier eine zusätzliche Sicherung dieser Schraubverbindung bereitzustellen.

Zur Lösung dieser Aufgabe stellt der Erfinder ein Sicherungselement mit den Merkmalen des Anspruchs 1 bereit. Vorteilhafte Weiterbildungen dieses Sicherungselements sind in den abhängigen Ansprüchen 2 bis 5 bezeichnet. Als weitere Aspekte der Erfindung werden in Anspruch 6 eine Konnektorschraube mit einem solchen Sicherungselement und in Anspruch 7 ein Konnektor zum Verbinden eines Trageriemens mit einer Kamera, der eine Konnektorschraube mit einem solchen Sicherungselement aufweist, angegeben.

Das erfindungsgemäße Sicherungselement ist demnach an einer in einem Boden eines Kameragehäuses eingelassenen Gewindebuchse festlegbaren Konnektorschraube lösbar festgelegbar und verhindert das Lösen der Konnektorschraube aus der Gewindebuchse. Erreicht wird diese Sicherung nun dadurch, dass das Sicherungselement jedenfalls folgende drei Abschnitte aufweist:
i) eine Verbindungsabschnitt zum lösbaren Festlegen an der Konnektorschraube;
ii) einen in der mit der in die Gewindebuchse eingeschraubten Konnektorschraube verbundenen Position des Sicherungselement sich entlang des Bodens des Kameragehäuses erstreckenden, sich an den Verbindungsabschnitt anschließenden Abstandsabschnitt; und
iii) einen sich an den Abstandsabschnitt anschließenden, schräg zu diesem verlaufenden Hintergriffabschnitt zum Hintergreifen einer sich an den Boden anschließenden Wand des Kameragehäuses, insbesondere der Rückwand.

Das Sicherungselement der Erfindung führt also mit einfach anmutenden, zugleich sehr effektiven Mitteln zu einer zusätzlichen Sicherung der in die Gewindebuchse eingeschraubten Konnektorschraube gegen ein unbeabsichtigtes Lösen. Dies geschieht letztlich dadurch, dass das Sicherungselement mit der in die Gewindebuchse eingeschraubten Konnektorschraube, zum Beispiel mit einem Schraubenkopf oder einem Griffabschnitt derselben, verbunden wird und das Sicherungselement dann so angeordnet ist, dass es mit dem Hintergriffabschnitt eine sich an den Boden anschließenden Wand des Kameragehäuses, insbesondere die Rückwand, in einer solchen Weise hintergreift, dass bei einem etwaigen Rotieren der Kameraschraube dieser Hintergriffabschnitt einen Anschlag bildet, der gegen die entsprechende Wand des Kameragehäuses, insbesondere die Rückwand, schlägt und dort für eine formschlüssige Arretierung sorgt.

An dieser Stelle ist zu betonen, dass das lösbare Festlegen des Verbindungsabschnittes an der Konnektorschraube auch in einer solchen Weise erfolgen kann, dass der Verbindungsabschnitt nicht etwa unmittelbar mit der Konnektorschraube oder einem Teil derselben zusammengeführt wird, sondern dass dies auch zu Beispiel durch Einklemmen dieses Verbindungsabschnittes zwischen der Konnektorschraube und dem Boden des Kameragehäuses bei gleichzeitiger Sicherung der Drehposition des Sicherungselementes relativ zu der Konnektorschraube geschehen kann, gegebenenfalls auch unter Zwischenlage weiterer Elemente, wie zum Beispiel eines elastischen Stützelementes, wie es als Gummischeibe oder dergleichen bereits jetzt bei bestehenden Konnektorschrauben Verwendung findet.

Der Verbindungsabschnitt kann gemäß einer vorteilhaften Ausgestaltungsvariante insbesondere als ein offener und elastisch verformbarer Klemmring zum kraft schlüssigen Verbinden mit einem Griffabschnitt der Konnektorschraube gebildet sein. Hierbei kann, für einen besseren verdrehfesten Halt des Verbindungsabschnittes an dem Abschnitt der Konnektorschraube, wenn dieser - wie dies häufig der Fall ist - gerändelt oder geriffelt ausgebildet ist, eine entsprechende Riffellung auf einer inneren Seite des Klemmrings gebildet sein, die zusätzlich zu der Klemmkraft und dem dadurch ausgebildeten Kraftschluss einen Formschluss ergibt, wenn Sie mit der entsprechenden Riffelung an dem Griffabschnitt der Konnektorschraube in Eingriff gelangt. Der als Klemmring ausgebildete Verbindungsabschnitt kann dabei Mittel zum Schließen um die Konnektorschraube, also zum Ausbilden eines festen Ringes beinhalten. Solche Mittel können z.B. eine an einer offenen Seite des Klemmringes angeformte, mit Rastnasen, Rastnuten oder vergleichbaren Rastmitteln ausgebildete Lasche und ein Gegenstück zum Einfädeln der Lasche mit entsprechenden komplementär ausgebildeten Rastmitteln sein.

Insbesondere kann bei einer solchen Lösung aber auch der Hintergriffabschnitt an einem mit dem Verbindungsabschnitt lösbar verbindbaren, diesen zu einem die Konnektorschraube vollständig umgreifenden Ring ergänzenden Verschlussabschnitt angeordnet sein. Bei einer solchen Lösung wird der Verbindungsabschnitt besonders zuverlässig und fest an der Konnektorschraube festgelegt und durch Anbringen des Verschlussabschnittes verriegelt. Grundsätzlich kann natürlich auch der Hintergriffabschnitt an dem Verbindungsabschnitt und der Verschlussabschnitt ohne Hintergriffabschnitt ausgebildet sein, ohne dass die Wirkung der Erfindung etwa eine andere wäre.

Alternativ und in einer besonders einfachen Ausgestaltungsvariante kann der Verbindungsabschnitt des Sicherungselement aber auch stiftartig ausgebildet sein zum Einführenden in eine passende radiale Aufnahmeöffnung in einem Abschnitt der Konnektorschraube, zum Beispiel in einem Griffabschnitt, und/oder zum Verpressen zwischen einem Kragenabschnitt der Konnektorschraube und dem Boden des Kameragehäuses, wie bereits erwähnt gegebenenfalls unter Zwischenlage eines elastischen Stützelementes. Ein solcher stiftartig ausgebildeter Verbindungabschnitt kann beispielsweise durch entsprechende Bemaßung der Außenkontur dieses Stiftabschnittes und der Innenkontur der Aufnahmeöffnung unter Ausbildung eines Übermaßes der Außenkontur, gegebenenfalls auch durch eine leicht konische Ausbildung des stiftförmigen Verbindungsabschnittes und entsprechende Gegenpassform der Aufnahmeöffnung, durch einen Presssitz kraftschlüssig gehalten sein, nachdem er in die Aufnahmeöffnung eingedrückt ist. Alternativ kann hier aber auch ein Gewinde ausgebildet sein, mit dem der stiftförmige Verbindungabschnitt in ein entsprechendes Gegengewinde in der Aufnahmeöffnung eingeschraubt wird. Für ein Festlegen des Verbindungsabschnittes der Konnektorschraube durch Verpressen zwischen einem Kragenabschnitt derselben und dem Boden des Kameragehäuses kann zum Beispiel ein zwischengelegtes elastisches Stützelement, zum Beispiel eine Gummischeibe, mit entsprechenden Ausnehmungen versehen sein, in die der stiftförmigen Verbindungsabschnitt einlegbar ist. Wenn das elastische Stützelement dann noch verdrehfest an der Konnektorschraube festgelegt ist, ergibt sich die erforderliche relativ zu der Konnektorschraube verdrehfeste Festlegung des Sicherungselements an der Konnektorschraube.

Grundsätzlich sind aber auch andere Gestaltungen des Verbindungsabschnittes denkbar und möglich, wobei der Fachmann entsprechende Gestaltungsvarianten unter der Prämisse, dass eine Verbindung zu schaffen ist, die eine verdreh- und auszugfeste Festlegung des Sicherungselements an der Konnektorschraube gewährleistet, ermitteln kann.

Ersichtlich bietet eine mit der Erfindung ebenfalls angegebene Konnektorschraube, die ein die vorstehend beschriebene Sicherungselement aufweist, den Vorteil, dass sie deutlich besser gegen ein unbeabsichtigtes Lösen aus der Gewindebuchse am Boden eines Kameragehäuses gesichert werden kann. In gleicher Weise kann auch ein Konnektor zum Verbinden einer Kamera mit einem Trageriemen verbessert werden, der eine solche Konnektorschraube mit dem Sicherungselement aufweist.

Weitere Vorteile und Merkmale der Erfindung ergeben sich aus der nachfolgenden Beschreibung von Ausführungsbeispielen. Dabei zeigen:
- Fig. 1: in drei Ansichten ein erstes Ausführungsbeispiel eines erfindungsgemäßen Sicherungselements im Zusammenwirken mit einer Konnektorschraube;
- Fig. 2: zwei Darstellungen a) und b) mit Aufsichten auf einen Kameraboden bei in die dort angeordnete Gewindebuchse eingeschraubter und mit dem Sicherungselement nach Fig. 1 gesicherter Konnektorschraube;
- Fig. 3: in drei Ansichten (isometrisch, a; von oben, b; und von unten c) ein zweites Ausführungsbeispiel eines erfindungsgemäßen Sicherungselements;
- Fig. 4: eine schematische Darstellung des Sicherungselements aus Fig. 3 im Zusammenwirken mit einer Konnektorschraube;
- Fig. 5: in drei Ansichten zwei weitere Ausführungsbeispiele für erfindungsgemäße Sicherungselemente im Zusammenwirken mit zugehörigen Konnektorschrauben;
- Fig. 6: eine der Figur 2 vergleichbare Aufsicht auf einen Kameraboden mit dort angebrachter Konnektorschraube und Sicherungselement in der Ausgestaltung eines der in Fig. 5 gezeigten Ausführungsbeispiele;
- Fig. 7: ein weiteres Ausführungsbeispiel eines Sicherungselements mit zugehöriger Konnektorschraube;
- Fig. 8: ein weiteres Ausführungsbeispiel eines Sicherungselements mit zugehöriger Konnektorschraube;
- Fig. 9: ein weiteres Ausführungsbeispiel eines Sicherungselements mit zugehöriger Konnektorschraube;
- Fig. 10: in den Ansichten a bis c ein weiteres Ausführungsbeispiel eines erfindungsgemäßen Sicherungselements im Zusammenwirken mit einer Konnektorschraube;
- Fig. 11: noch ein weiteres Ausführungsbeispiel eines erfindungsgemäßen Sicherungselementes in einer geöffneten Stellung;
- Fig. 12: das Sicherungselement nach Fig. 11 in einer Mittelstellung beim Schließen oder Öffnen; und
- Fig. 13: das Sicherungselement aus Fig. 11 in einer geschlossenen Stellung, wie es um eine (hier nicht gezeigte) Konnektorschraube herum und an dieser festgelegt ist.

In den Figuren sind in stark schematisierten Zeichnungen ausgewählte Ausführungsbeispiele für ein erfindungsgemäßes Sicherungselement im Zusammenwirken mit einer Konnektorschraube, bzw. einem eine solche Konnektorschraube aufweisenden Konnektor dargestellt. Diese Ausführungsbeispiele werden nachstehend unter Bezugnahme auf die Figuren näher beschrieben.

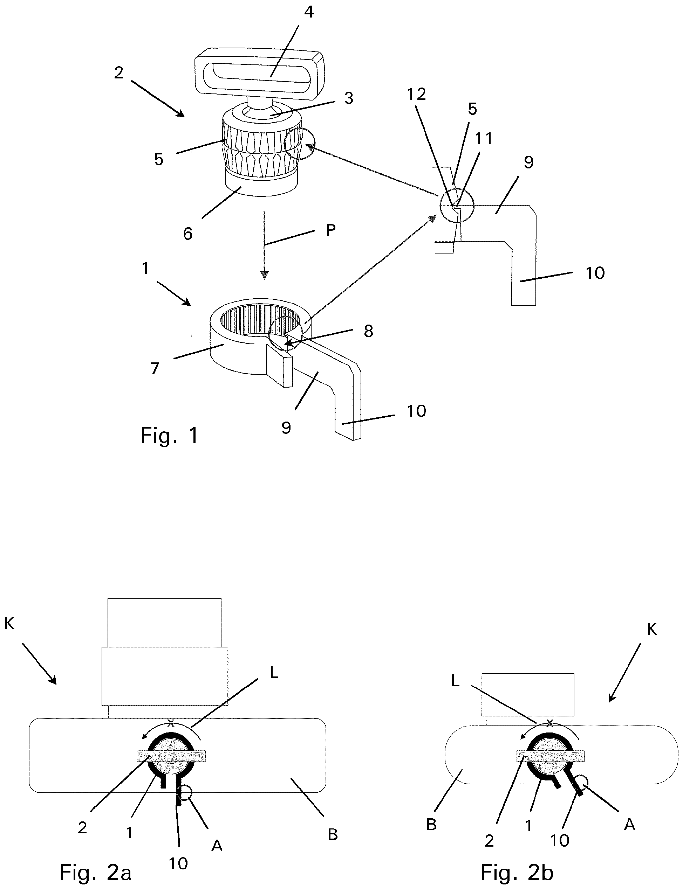

Zunächst zeigt die Figur 1 ein erstes Ausführungsbeispiel für ein erfindungsgemäßes Sicherungselement 1. Dieses Sicherungselement 1 dient dem Sichern einer Konnektorschraube eines Konnektors 2 in einer mit einer Gewindebuchse am Boden eines Kameragehäuses verbundenen Situation und dient einem Verhindern eines unbeabsichtigten Losdrehen derselben. Der Konnektor 2 hat eine über eine Kugellagerung 3 gelenkig angebundene Riemenöse 4, durch die ein Trageriemen gefädelt werden kann. Ein Griffabschnitt 5 des Konnektor 2, der zum Einschrauben der Konnektorschraube in die Gewindebuchse ergriffen und gedreht werden kann, ist mit einer Riffelung versehen. In der hier dargestellten Perspektive ist der Schraubanschluss mit dem Gewinde der Konnektorschraube nicht erkennbar. Er liegt in der hier gezeigten Perspektive hinter einem mit dem Griffabschnitt 5 verbundenen Gummiring 6 verborgen.

Durch einen Pfeil P ist hier angedeutet, dass zum Sichern des Konnektors 2 bzw. der Konnektorschraube desselben dieser Griffabschnitt 5 mit einem die Form eines offenen Ringes aufweisenden Verbindungsabschnitt 7 des Sicherungselements 1 verbunden wird. Dieser Verbindungsabschnitt 7 ist aus einem elastisch flexiblen Material, zum Beispiel einem Kunststoff oder einem Metall, gebildet und kann durch Spreizen der Öffnung 8 gedehnt werden, um ihn so über den Griffabschnitt 5 zu führen. Der Verbindungsabschnitt springt aufgrund der Elastizität des Materials ohne anliegende Spreizkraft zurück in seine ringförmige Ursprungsstellung. Einstückig an den ringförmigen Verbindungsabschnitt 7 angeformt ist ein stegartig gebildeter Abstandsabschnitt 9, der an seinem äußeren Ende wiederum einstückig in einen Hintergriffabschnitt 10 übergeht, der hakenförmig nach unten vorsteht. In der in Figur 1 rechts dargestellten Detaildarstellung ist ein an einem oberen Rand des ringförmigen Verbindungsabschnitts 7 nach innen vorstehender umlaufender Kragen 11 zu erkennen, der zum Arretieren einer axialen Position des Sicherungselementes 1 an dem Griffabschnitt 5 in einer dort ausgebildete umlaufende Rille 12 einschnappt und dort verrastet.

In Figur 2 ist in zwei Darstellungen a und b dargestellt, wie der Konnektor 2 in den Boden B eines Gehäuses einer Kamera K eingeschraubt und das Sicherungselement 1 aufgesetzt ist. Zu erkennen ist hier, dass der Hintergriffabschnitt 10 ausgehend von dem Boden B des Gehäuses der Kamera K sich entlang der Rückwand dieses Gehäuses erstreckt und so einen formschlüssigen Anschlag bildet. Ein Vergleich der Darstellungen in den Figuren 2 a und b zeigt, dass hier unterschiedlich breite, bzw. tiefe Böden B der Gehäuse der Kamera K gegeben sind, wobei sich der durch einen Kreis bezeichnete Anschlagspunkt A entsprechend verändert, das Sicherungselement 1 also an verschiedene Kameraformate angepasst ist. Weiterhin ist zu erkennen, dass bei einem in Richtung des Pfeils L, der die Drehrichtung zum Lösen der Konnektorschraube aus dem Gewinde der Gewindebuchse aufzeigt, sich ein selbstverriegelnder Effekt einstellt, indem der Hintergriffabschnitt 10 weiter gegen die Rückwand der Kamera K gedrückt wird und somit eine Lösebewegung verhindert.

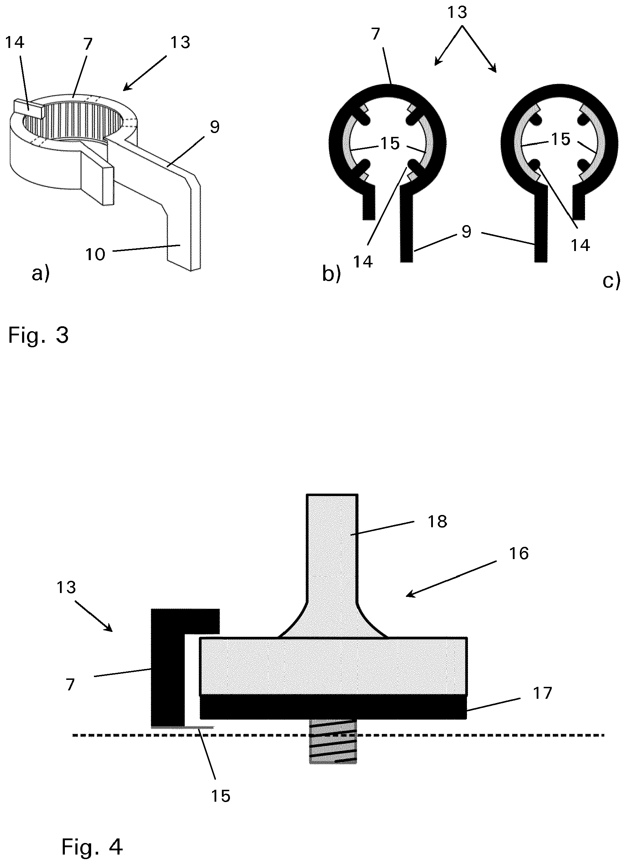

In Figur 3 ist in drei verschiedenen Ansichten a bis c ein zweites Ausführungsbeispiel eines Sicherungselements 13 dargestellt. Auch dieses hat einen ringförmigen Verbindungsabschnitt 7, der in einer Öffnung 8 durchbrochen ist, und an dem sich ein Abstandsabschnitt 9 mit einem daran angeformten Hintergriffabschnitt 10 anschließt. Bei dem hier bezeichneten Sicherungselement 13 wird die axiale Sicherung an der Konnektorschraube auf andere Weise bewerkstelligt als mit dem umlaufenden Kragen 11 aus dem zuvor beschriebenen Ausführungsbeispiel. Hier sind auf einem oberen Rand des Verbindungsabschnitts 7 Stege 14 angeformt (in Figur 3a nur einer gezeigt, weitere Stege sitzen auf den mit gestrichelten Linien angedeuteten Positionen) und befinden sich auf einer Unterseite ausgehend von dem Rand des Verbindungsabschnitts 7 nach innen ragende, blattartige Zungen 15. Diese Zungen 15 sind besonders gut in den Figuren 3b (Ansicht von oben) und 3c (Ansicht von unten) zu erkennen. Wie in Figur 4 erkannt werden kann, übergreifen die Stege 14 an dem Verbindungsabschnitt 7 eine Oberkante einer Konnektorschraube eines Konnektors 16, und ergreifen die Zungen 15 eine elastische Pufferscheibe 17 an dem Konnektor 16. Hierbei handelt es sich bei dem Konnektor 16 um eine andere Art des Konnektor, der an einem nach oben laufenden, stegförmigen Abschnitt 18 eine (nicht näher dargestellte) ösenartige Öffnung zur Verbindung mit einem Karabinerhaken aufweist.

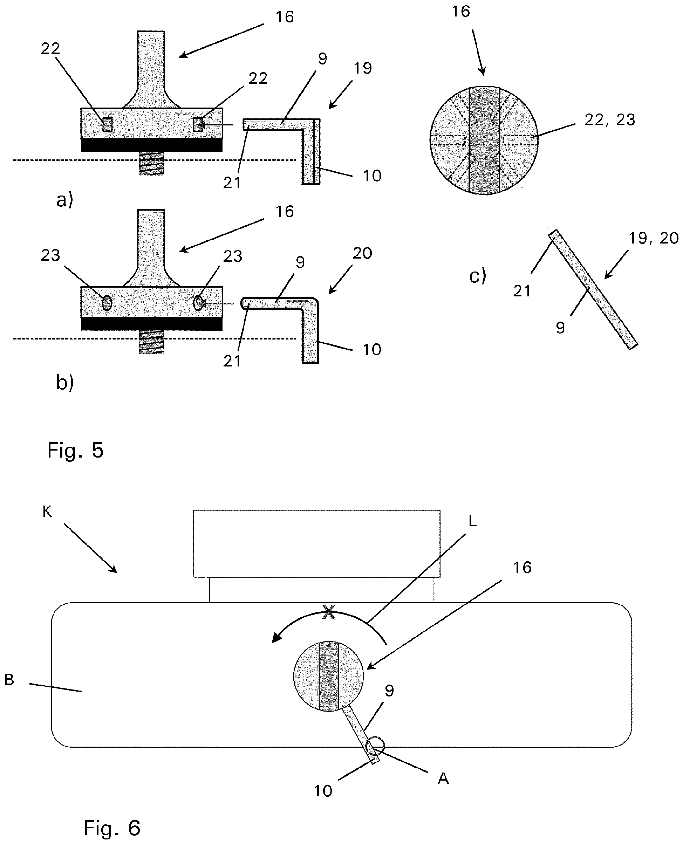

In den Figuren 5a bis c sind zwei weitere Ausführungsbeispiele eines erfindungsgemäßen Sicherungselements dargestellt. Gezeigt ist hier ein sehr einfaches Sicherungselement 19 bzw. 20, welches jeweils die Form eines einfachen Hakens annimmt. Hier ist der Verbindungsabschnitt ein stiftartiger Abschnitt am freien Ende 21 des Abstandsabschnitts 9, der eine Außenkontur aufweist, die mit der Geometrie entsprechender Aufnahmeöffnungen 22, 23, die radial in die Konnektorschraube (in den Konnektor 16) geführt sind, korrelieren. In der Ausgestaltungsvariante gemäß Figur 5a ist ein rechteckiger, in der Ausgestaltungsvariante gemäß Figur 5b ein kreisrunder Querschnitt vorgesehen. Auch bei den hier gezeigten Sicherungselementen 19, 20 ist ein Hintergriffabschnitt 10 hakenartig gebildet, der im montierten Zustand, wie in Figur 6 gezeigt, wenn also der Konnektor 16 mit einer Konnektorschraube in die Gewindebuchse am Boden B des Gehäuses einer Kamera K geschraubt ist, über die Rückwand dieses Gehäuses vorsteht und dort arretiert an dem Anschlagpunkt. A. Auch hier ist die Gestaltung des Verbindungselements 7 wiederum so, dass sich bei einem in Richtung der Löserichtung L anliegenden Kraft der offene Ring zuzieht und so zu einem noch festeren Halt und einer verbesserten Sicherung der Konnektorschraube führt.

In Figur 5c ist der Konnektor 16 mit der Konnektorschraube zu erkennen und mit gestrichelten Linien sind die Aufnahmeöffnungen 22, 23 angedeutet, die sich radial in den Körper des Konnektors 16 bzw. der Konnektorschraube erstrecken, und in die das Sicherungselement 19 bzw. 20 mit seinem Verbindungabschnitt 21 eingeschoben wird. Das Sicherungselement 19 bzw. 20 hält in dieser Ausgestaltungsvariante durch einen Presssitz in den Aufnahmeöffnungen 23, in dem Ersteres in eine dieser Aufnahmeöffnungen 22, 23 mit Kraft eingedrückt wird und dann dort aufgrund entsprechend gewählter Abmessungen kraftschlüssig hält. Zum Lösen der Konnektorschraube bzw. des Konnektors 16 wird dann das Sicherungselement 19 bzw. 20 wieder aus der Aufnahmeöffnung 22, 23 herausgezogen. Dies kann z.B. durch eine Linksdrehung und eine dadurch hervorgerufenen Entriegelung geschehen oder auch durch einfaches Ziehen gegen eine Widerstand. Nach dem Lösen des Sicherungselementes 19 bzw. 20 kann der Konnektor 16 mit der Konnektorschraube aus der Gewindebuchse am Boden B des Gehäuses der Kamera K gelöst werden.

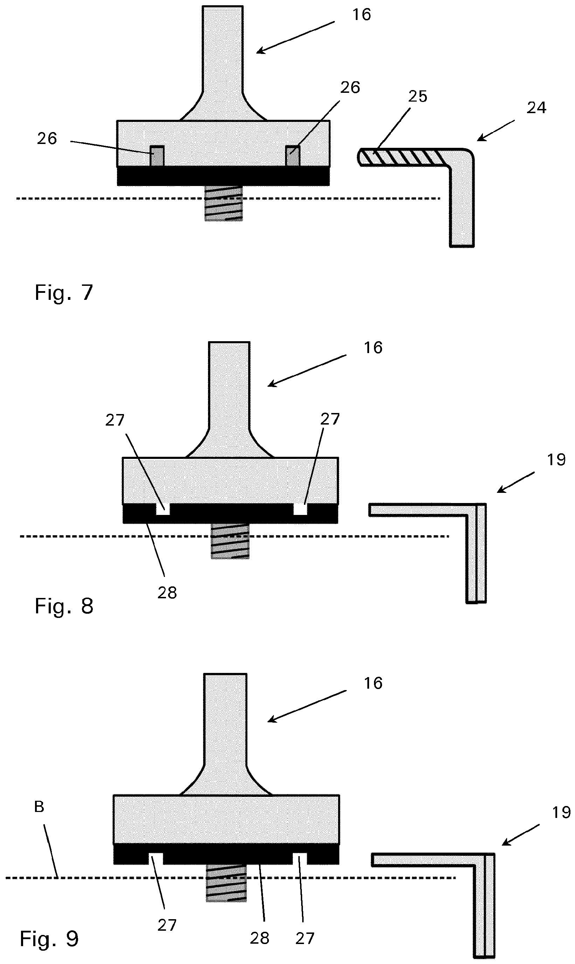

Die Figuren 7 bis 9 zeigen weitere Ausgestaltungsvarianten entsprechend den in Figur 5 gezeigten Ausführungsbeispielen. In Figur 7 ist das Sicherungselement 24 in dem Verbindungsabschnitt 25 mit einem Gewinde versehen und wird in die entsprechend mit einem Innengewinde versehene Aufnahmeöffnung 26 an dem Konnektor 16 bzw. der Konnektorschraube eingeschraubt. Bei dem Ausführungsbeispiel gemäß Figur 8 wird das Sicherungselement 19 in Aussparungen 27 eines mit der Konnektorschraube fest verbundenen, z.B. verklebten, elastischen Pufferelements 28 (z.B. einer Unterlegscheibe aus Gummi) eingeführt und dort durch weiteres Einschrauben der Konnektorschraube bzw. des Konnektors 16 in die Gewindebuchse verklemmt. Figur 9 zeigt eine ähnliche Ausgestaltungsvariante, bei der das Einklemmen zwischen dem Pufferelement 28 und dem Boden B des Gehäuses der Kamera K erfolgt.

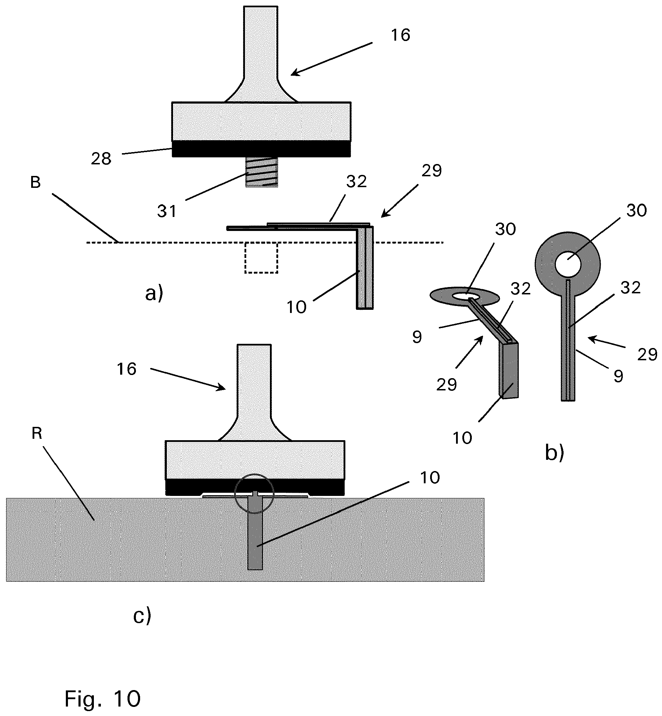

In Figur 10 ist ein weiteres Ausführungsbeispiel für ein erfindungsgemäßes Sicherungselement 29 dargestellt. Dieses ist in seinem Verbindungsabschnitt nach Art einer Unterlegscheibe flach mit einer Öffnung 30 gebildet, durch die das Gewindestück 31 der Konnektorschraube des Konnektors 16 hindurchgeführt wird. In dem Abstandsabschnitt 9 ist auf einer Oberseite eine leistenförmige Erhebung 32 ausgebildet, die einer Verdrehsicherung des Sicherungselements 29 dient. Denn diese leistenförmige Erhebung 31 drückt sich, wie dies durch die Einkreisung in Figur 10c dargestellt ist, in das Pufferelement 28 und gewinnt dadurch einen verdrehfesten Halt. Auch dieses Sicherungselement 29 hat eine Hintergriffabschnitt 10, der, wie Figur 10c andeutet, hinter einer Rückwand R einer Kamera K arretiert und so die die Sicherung gegen ein ungewolltes Losschrauben des Konnektors 16 besorgt.

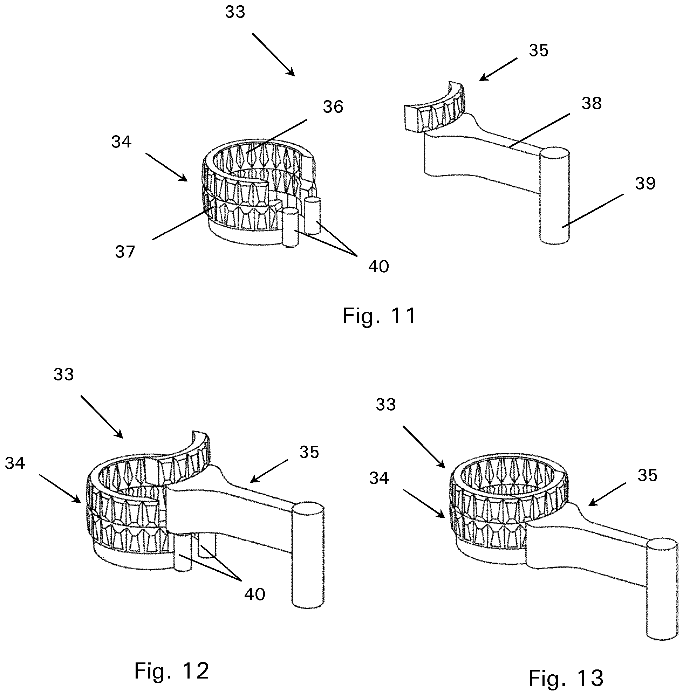

In den Figuren 11 bis 13 ist schließlich noch ein weiteres Ausführungsbeispiel für ein erfindungsgemäßes Sicherungselement 33 gezeigt. Dieses ist wiederum zweiteilig ausgeführt mit einem als offener Klemmring ausgebildeten Verbindungsabschnitt 34 und einem Verschlussabschnitt, der in die Ringöffnung des Verbindungsabschnittes 34 eingesetzt werden kann und diesen dann verschließt.

Auf einer innen liegenden Seite des Verbindungsabschnittes 34 ist eine komplementär zu einer Riffelung auf der Außenfläche einer Konnektorschraube gebildete Riffelung 36 gebildet, die den Verbindungsabschnitt 34 mit der Konnektorschraube verrastend verbindet. Eine auf der Außenseite des Verbindungsabschnittes 34 und auch des Verschlussabschnittes 35 angebrachte Riffelung dient rein optischen Gründen und kann auch fortgelassen werden.

Bei dem hier gezeigten Ausführungsbeispiel ist an dem Verschlussabschnitt 35 über einen einstückig mit dem Verschlussabschnitt 35 verbundenen Abstandsabschnitt 38 ein mit dem Abstandsabschnitt wiederum einstückig geformter Hintergriffabschnitt 39 festgelegt. Verbindungsabschnitt 34 und Verschlussabschnitt 35 sind vorzugsweise aus einem Kunststoffmaterial gefertigt.

An den Rändern der Ringöffnung des Verbindungsabschnittes 34 sind mit ihren Längsachsen parallel verlaufende zylinderförmige Verbindungsvorsprünge 40 angeformt. Über diese werden in dem Verbindungsabschnitt ausgebildete korrespondierende Aufnahmeöffnungen (in den Figuren nicht gezeigt) geführt zum festen und formschlüssigen Verbinden der beiden Abschnitte 34 und 35. Hierbei kein ein gewisses Untermaß der vorzugsweise mit einem Längsschlitz versehenen Öffnungen im Vergleich zu den Durchmessern der Verbindungsvorsprünge 40 für eine zusätzliche Klemmwirkung und kraftschlüssige Sicherung der Verbindung sorgen.

Die Vorgehensweise beim Montieren des Sicherungselements 33 ist in den Figuren 12 und 13 gezeigt. Hierbei wird zunächst der Verbindungsabschnitt 34 so auf die in einer an der Kamera angeordneten Gewindebuchse, z.B. der Stativgewindebuchse, festgelegte Konnektorschraube aufgesetzt, dass die Ringöffnung so in Richtung der Kamerarückwand zeigt, dass durch Anbringen des Verschlussabschnitts 34 der Hintergriffabschnitt 39 an einer Kamerawand, insbesondere der Kamerarückwand, anliegt. Dann wird der Verschlussabschnitt 35 wie in Fig. 13 gezeigt auf die Verbindungsvorsprünge 40 aufgesetzt und mit dem Verbindungsabschnitt zum Bilden eines fest geschlossenen Ringes verbunden (Fig. 13). Dabei kann bei dem Verbinden des Verschlussabschnittes 35 mit dem Verbindungsabschnitt 34 auch eine den Ring weiter schließende Zugkraft aufgebracht werden, z.B. gesteuert durch eine leicht konische Ausbildung der Verbindungsvorsprünge 40 oder durch eine leicht gegeneinander verkippte Ausrichtung derselben. In umgekehrter Reihenfolge erfolgt dann das Lösen und Demontieren. Erkennbar können Abstandsabschnitt und Hintergriffabschnitt bei dem in den Figuren 11 bis 13 gezeigten Ausführungsbeispiel in einer Variante anstelle an dem Verschlussabschnitt 35 auch an dem Verbindungsabschnitt 34 angeordnet, insbesondere angeformt sein.

Die in den vorstehend beschriebenen Figuren gezeigten Ausführungsbeispiele dienen der weiteren Erläuterung möglicher Ausgestaltungsvarianten und deren besonderer Vorteile und Merkmale, beschränken die Erfindung jedoch nicht. Diese Erfindung ist in den nachstehenden Ansprüchen in ihrer breiten Allgemeinheit bestimmt.

### (Fig. 11)

### Bezugszeichenliste

- 1: Sicherungselement
- 2: Konnektor
- 3: Kugellagerung
- 4: Riemenöse
- 5: Griffabschnitt
- 6: Gummiring
- 7: Verbindungsabschnitt
- 8: Öffnung
- 9: Abstandsabschnitt
- 10: Hintergriffabschnitt
- 11: Kragen
- 12: Rille
- 13: Sicherungselement
- 14: Steg
- 15: Zunge
- 16: Konnektor
- 17: elastische Pufferscheibe
- 18: stegförmiger Abschnitt
- 19: Sicherungselement
- 20: Sicherungselement
- 21: freies Ende
- 22: Aufnahmeöffnung
- 23: Aufnahmeöffnung
- 24: Sicherungselement
- 25: Verbindungsabschnitt
- 26: Aufnahmeöffnung
- 27: Aussparung
- 28: Pufferelement
- 29: Sicherungselement
- 30: Öffnung
- 31: Gewindestück
- 32: leistenförmige Erhebung
- 33: Sicherungselement
- 34: Vebindungsabschnitt
- 35: Verschlussabschnitt
- 36: Riffelung
- 37: Riffelung
- 38: Abstandsabschnitt
- 39: Hintergriffabschnitt
- 40: zylinderförmige Verbindungsvorsprünge
- A: Anschlagpunkt
- B: Boden
- K: Kamera
- L: Pfeil
- P: Pfeil
- R: Rückwand

## Patentansprüche

1. An einer in einer an einem Boden (B) eines Kameragehäuses eingelassenen Gewindebuchse festlegbaren Konnektorschraube lösbar festlegbares Sicherungselement (1; 13; 19; 20; 29; 33) zum Verhindern eines Lösens der Konnektorschraube aus der Gewindebuchse, wobei das Sicherungselement (1; 13; 19; 20; 29; 33) folgende Bestandteile aufweist:
i) einen Verbindungsabschnitt (7; 21; 34) zum lösbaren Festlegen an der Konnektorschraube;
ii) einen in der mit der in die Gewindebuchse eingeschraubten Konnektorschraube verbundenen Position des Sicherungselements (1; 13; 19; 20; 29; 33) sich entlang des Bodens (B) des Kameragehäuses erstreckenden, sich an den Verbindungsabschnitt (7; 21; 34) anschließenden Abstandsabschnitt (9; 38); und
iii) einen sich an den Abstandsabschnitt (9; 38) anschließenden, schräg zu diesem verlaufenden Hintergriffabschnitt (10; 39) zum Hintergreifen einer sich an den Boden (B) anschließenden Wand (R) des Kameragehäuses, insbesondere der Rückwand.

2. Sicherungselement (1; 13; 33) nach Anspruch 1, **dadurch gekennzeichnet, dass** der Verbindungabschnitt (7; 34) als ein offener und elastisch verformbarer Klemmring zum kraftschlüssigen Verbinden mit einem Griffabschnitt (5) der Konnektorschraube gebildet ist.

3. Sicherungselement nach Anspruch 2, **gekennzeichnet, durch** einen mit dem Verbindungsabschnitt (34) lösbar verbindbaren, diesen zu einem die Konnektorschraube vollständig umgreifenden Ring ergänzenden Verschlussabschnitt (35), wobei der Abstandsabschnitt (38) und der Hintergriffabschnitt (39) an dem Verbindungsabschnitt (34) oder dem Verschlussabschnitt (35) angeordnet ist.

4. Sicherungselement (19; 20; 29) nach Anspruch 1, **dadurch gekennzeichnet, dass** der Verbindungsabschnitt (21) stiftartig ausgebildet ist zum Einführen in eine passende radiale Aufnahmeöffnung (22; 23; 26) in einem Abschnitt der Konnektorschraube und/oder zum Verpressen zwischen einem Kragenabschnitt der Konnektorschraube und dem Boden (B) des Kameragehäuses, ggf. unter Zwischenlage eines elastischen Stützelementes (28).

5. Sicherungselement nach einem der vorhergehenden Ansprüche, **dadurch gekennzeichnet, dass** der Hintergriffabschnitt (10; 39) einstückig mit dem Abstandsabschnitt (9; 38) und insgesamt hakenförmig ausgebildet ist.

6. In einer an einem Boden (B) eines Kameragehäuses eingelassenen Gewindebuchse festlegbare Konnektorschraube mit einem lösbar an dieser festlegbaren Sicherungselement (1; 13; 19; 20; 29; 33) nach einem der vorherstehenden Ansprüche.

7. Konnektor (2; 16) zum Verbinden eines Tragriemens mit einer Kamera (K), enthaltend eine Konnektorschraube nach Anspruch 6.
